# EUROPÄISCHE PATENTSCHRIFT

(11) **EP 1 902 571 B1**
(45) Veröffentlichungstag und Bekanntmachung des Hinweises auf die Patenterteilung: **21.10.2009**
(21) Anmeldenummer: 06777501.5
(22) Anmeldetag: 29.06.2006
(51) Int. Cl.: H04L 29/12, H04L 12/28

(54) **VERFAHREN, KOMMUNIKATIONSANORDNUNG UND KOMMUNIKATIONSVORRICHTUNG ZUM EINRICHTEN EINER KOMMUNIKATIONSBEZIEHUNG**
METHOD COMMUNICATION ARRANGEMENT AND COMMUNICATION DEVICE FOR ESTABLISHING A COMMUNICATION RELATIONSHIP
PROCEDE, SYSTEME DE COMMUNICATION ET DISPOSITIF DE COMMUNICATION POUR ETABLIR UNE LIAISON DE COMMUNICATION

(30) Priorität: 04.07.2005 DE 102005031168
(43) Veröffentlichungstag der Anmeldung: 26.03.2008
(73) Patentinhaber: Nokia Siemens Networks GmbH & Co. KG, 81541 München (DE)
(72) Erfinder: SCHAEFER, Thomas, 65779 Kelkheim (DE); VOIGT, Katrin, 17489 Greifswald (DE); SCHMIDTKE, Uwe, 17493 Greifswald (DE)
(86) Internationale Anmeldenummer: PCT/EP2006/063670
(87) Internationale Veröffentlichungsnummer: WO 2007/003569

(56) Entgegenhaltungen:
- WO-A-02/076017
- US-A1- 2002 013 858
- US-A1- 2002 196 802

## Beschreibung

In aktuellen Kommunikationsnetzen, insbesondere Teilnehmerzugangsnetzen - auch als Access-Networks bezeichnet- sind mehrere Teilnehmer bzw. den Teilnehmern zugeordnete Kommunikationseinrichtungen über Multiplexereinrichtungen -auch als DSLAM bzw. Digital Subscriber Line Access-Multiplexer bezeichnet- an ein übergeordnetes Kommunikationsnetz bzw. Backbone angeschlossen. Aufgabe der Multiplexereinrichtungen ist es, Informationen von allen Teilnehmern an das Backbone-Netzwerk weiterzuleiten und Informationen aus dem Backbone-Netzwerk direkt an die einzelnen Teilnehmer zur Verfügung zu stellen. Um eine unnötige Überlastung der Kapazität der jeweiligen Datenübertragungswege und damit eine Blockade der angeschlossenen Kommunikationseinrichtungen zu vermeiden, ist die Multiplexereinrichtung so konzipiert, dass in Upstream-Richtung, d.h. von den einzelnen Kommunikationseinrichtungen in Richtung des übergeordneten Kommunikationsnetzes, alle zu übermittelten Informationen weitergeleitet werden, in Downstream-Richtung, d.h. vom übergeordneten Kommunikationsnetz in Richtung der einzelnen Kommunikationseinrichtungen, jedoch nur Informationen, die direkt an die einzelnen Teilnehmer adressiert sind, auch nur an diese weitergeleitet werden. Dies bedeutet, dass im übergeordneten Kommunikationsnetz mittels Rundsende-Verfahren ausgesendete Broadcast-Informationen von der jeweiligen Multiplexereinrichtung nicht an alle jeweils angeschlossenen Teilnehmer bzw. Kommunikationseinrichtungen übermittelt werden.

In aktuellen Kommunikationsnetze, d.h. sowohl in Teilnehmerzugangsnetzen (First Mile) als auch in den damit verbundenen übergeordneten Kommunikationsnetzen (Second Mile) ist häufig eine gemäß dem Ethernet-Übertragungsverfahren bzw. -Protokoll ausgestaltete Ebene (Layer 2) implementiert (auch als Carrier-Ethernet-Kommunikationsnetze bezeichnet) über welche beispielsweise gemäß dem Internet-Protokoll (IP) ausgestaltete Dienste realisiert sind. Die über derartige Carrier-Ethernet-Kommunikationsnetze übermittelten IP-Datenpakete beinhalten zumindest eine IP-Adresse - dagegen werden in der Layer 2 Ebene bzw. Ethernet-Protokollschicht ethernetspezifischen MAC-Adressen für die Wegefindung verwendet. Für die Suche nach der entsprechenden MAC-Adresse bei gegebener IP-Adresse wurde eine eigene Prozedur geschaffen, das Address Resolution Protokoll (ARP). Dieses Protokoll muss beispielsweise in allen IP-Hosts implementiert sein, die an ein Ethernet-Kommunikationsnetz angeschlossen sind.

In großen Carrier-Ethernet-Kommunikationsnetzen mit einer sehr hohen Anzahl von Teilnehmern, stellen die Datenpakete bzw. Frames des Adress Resolution Protokoll (ARP) eine sehr hohe Daten-Last dar. ARP-Frames sind Broadcast-Nachrichten, d.h. diese werden mittels Rundsendeverfahren in das Kommunikationsnetz ausgesendet. In einigen Kommunikationsnetzen können bis zu 10 Prozent der übermittelten Informationen allein auf ARP-Frames entfallen.

Auch hinsichtlich Datensicherheit stellen die ausgesendeten ARP-Frames bzw. Meldungen ein Sicherheitsrisiko dar, da alle beispielsweise an einer Multiplexereinrichtung eintreffenden Broadcast-Nachrichten, d.h. alle ARP-Frames von allen angeschlossenen Teilnehmern empfangen werden. Nachteilig können dadurch fremde MAC- oder IP-Adressen anderer Teilnehmer für z.B. Netzattacken böswillig übernommen werden.

Die Druckschrift DI (US 2002/0013858) beschreibt ein Verfahren in dem ein ARP-Cache als Stellvertreter ARP-Meldungen beantwortet.

Der Erfindung liegt somit die Aufgabe zugrunde, die in aktuellen Kommunikationsnetzen anfallende Netzlast zu minimieren sowie die Informations- und Datensicherheit innerhalb dieser Kommunikationsnetze zu verbessern. Die Aufgabe wird ausgehend von einem Verfahren, einer Kommunikationsanordnung sowie einer Kommunikationsvorrichtung gemäß den Merkmalen des Oberbegriffs der Patentansprüche 1, 5 und 6 durch die jeweils kennzeichnenden Merkmale gelöst.

Beim erfindungsgemäßen Verfahren zum Einrichten einer Kommunikationsbeziehung zu zumindest einer über eine Multiplexereinrichtung an zumindest ein Kommunikationsnetz angeschlossenen, zumindest eine kommunikationsnetzspezifische Adresse aufweisenden Kommunikationseinrichtung, wird zumindest eine, die Einrichtung der Kommunikationsbeziehung initiierende Meldung in Richtung der Multiplexereinrichtung übermittelt.

Der wesentliche Aspekt des erfindungsgemäßen Verfahrens besteht darin, dass jeweils den Anschluss der zumindest eine Kommunikationseinrichtung an die Multiplexereinrichtung repräsentierende Anschluss-Informationen in der Multiplexereinrichtung gespeichert sind, wobei den Anschluss-Informationen jeweils die zumindest eine kommunikationsnetzspezifische Adresse der zumindest einen an den jeweiligen Anschluss angeschlossenen Kommunikationseinrichtung zugeordnet ist. Die zumindest eine an die Multiplexereinrichtung übermittelte Meldung wird detektiert und zumindest eine in der detektierten Meldung enthaltene Ziel-Adresse mit den gespeicherten kommunikatiosnetzspezifischen Adressen verglichen. Bei Feststellung einer zumindest teilweisen Übereinstimmung der miteinander verglichenen Informationen wird die Meldung oder eine die Einrichtung der Kommunikationsbeziehung initiierende Information an den zumindest einen durch die zugeordneten Anschluss-Informationen repräsentierten Anschluss weitervermittelt.

Der wesentliche Vorteil des erfindungsgemäßen Verfahrens besteht darin, dass insbesondere gemäß einem Rundsende-Übertragungsverfahren bzw. Broadcast ausgesendete Meldungen nur noch an die jeweils betreffenden Teilnehmeranschlüsse bzw. den jeweils daran angeschlossenen Teilnehmern übermittelt werden. Dadurch wird der Umfang der über das Kommunikationsnetz übertragenden Informationen bzw. Nachrichtenaufkommen verringert sowie die Datensicherheit erhöht, da die rundgesendeten Informationen nicht mehr von allen Teilnehmern empfangen werden können.

Weitere vorteilhafte Ausgestaltungen des erfindungsgemäßen Verfahrens sowie eine Kommunikationsanordnung und eine Kommunikationsvorrichtung sind den weiteren Ansprüchen zu entnehmen.

Im Folgenden wird das erfindungsgemäße Verfahren anhand eines Blockschaltbildes näher erläutert. Das Blockschaltbild zeigt mehrere in einem Teilnehmerzugangsnetz bzw. Access-Network ACCESS angeordnete Teilnehmer bzw. diesen zugeordnete Kommunikationseinrichtungen KE1...n, welche über jeweilige Verbindungsleitungen an entsprechende Teilnehmeranschlusseinheiten AE1...n einer Multiplexereinrichtung MUX - auch als DSLAM bezeichnet (Digital Subscriver Line Access Multiplexer) - angeschlossen sind. Die Multiplexereinrichtung MUX ist über eine weitere Anschlusseinrichtung AA bzw. Uplink mit einem übergeordneten, gemäß dem Internet-Protokoll ausgestalteten Kommunikationsnetz OKN verbunden. In der Multiplexereinrichtung MUX ist eine die Durchführung des erfindungsgemäßen Verfahrens steuernde Steuervorrichtung CONT angeordnet, welcher Speichermittel MEM zugeordnet sind. Die Schicht 2 (Layer 2) des Teilnehmerzugangsnetzes ACCESS ist gemäß dem Ethernet-Übertragungsprotokoll ausgestaltet, über welches z.B. gemäß dem Internet-Protokoll IP ausgestaltete Dienste (z.B. VoIP) realisiert sind. Die einzelnen Kommunikationseinrichtungen KE1...n weisen sowohl eine ethernetkonforme Adresse MAC =x1...n (auch als MAC-Adresse bezeichnet, Medium Access Control) sowie eine gemäß dem Internet-Protokoll ausgestaltete IP-Adresse, IP =y1...n auf.

Erfindungsgemäß ist im Speicher MEM eine Tabelle TAB gespeichert, welche mehrere Tabelleneinträge tab1...n aufweist. Jeder Tabelleneintrag tab1...n ist einer der Teilnehmeranschlusseinrichtungen AE1...n der Multiplexereinrichtung MUX zugeordnet, wobei jeder der Tabelleneinträge tab1...n eine den jeweiligen Anschluss, d.h. die jeweilige Teilnehmeranschlusseinrichtung AE1...n repräsentierende Information vcxIndex = vi1...n (auch als Anschlussindex "vcxIndex" bezeichnet) aufweist. Dem jeweiligen Anschlussindex vcxIndex ist in einem weiteren Eintrag bzw. Spalte IP die jeweilige IP-Adresse IP=y1...n der zumindest einen jeweils an diese Teilnehmeranschlusseinrichtung AE1...n angeschlossenen Kommunikationseinrichtung KE1...n zugeordnet.

Für die weiteren Ausführungen sei angenommen, dass ausgehend von einer im übergeordneten Kommunikationsnetz OKN angeordneten Kommunikationseinrichtung, beispielsweise durch ein im Kommunikationsnetz OKN angeordneten Router ROUT, eine Kommunikationsbeziehung kb zur ersten Kommunikationseinrichtung KE1 eingerichtet werden soll - durch einen strichlierten Doppelpfeil verdeutlicht. Hierzu wird durch den Router ROUT ein entsprechender interner Befehl ausgelöst, aufgrund dessen eine die einzurichtende Kommunikationsbeziehung initiierende Meldung, hier ARP-REQUEST generiert und gemäß Broadcast-Übertragungsverfahren in Richtung Multiplexereinrichtung MUX vermittelt wird. In dieser Meldung ARP-REQUEST ist die IP-Adresse der ersten Kommunikationseinrichtung KE1, IP=y1 als Zieladresse ZA enthalten. Erfindungsgemäß wird die an der Multiplexereinrichtung MUX eintreffende Meldung ARP-REQUEST detektiert und die darin enthaltene Zieladresse ZA=y1 erfasst. Die erfasste Zieladresse ZA wird mit dem in den einzelnen Tabelleneinträgen tab1...n gespeicherten IP-Adressen y1...n verglichen. In diesem Ausführungsbeispiel stimmt die Zieladresse ZA=y1 mit der im ersten Tabelleneintrag tab gespeicherten IP-Adresse IP=y1 überein. Gemäß dem erfindungsgemäßen Verfahren wird die an der Multiplexereinrichtung MUX empfangene Meldung ARP-REQUEST an die innerhalb des Tabelleneintrages tab entsprechend zugeordnete, durch den Anschlussindex vcxIndex repräsentierte Teilnehmeranschlusseinrichtung, hier vcxIndex=vi1=AE1 weitergeleitet. Gemäß einer ersten Ausgestaltungsvariante wird die an die erste Anschlusseinrichtung AE1 weitergeleitete Meldung ARP-REQUEST über die angeschlossene Verbindungsleitung an die erste Kommunikationseinrichtung KE1 weitervermittelt.

Alternativ kann durch die in der Multiplexereinrichtung MUX angeordnete Steuereinrichtung CONT ein der Meldung ARP-REQUEST entsprechender Befehl generiert und dieser Befehl bzw. diesen Befehl repräsentierende Informationen über die durch den jeweiligen Anschlussindex vcxIndex repräsentierte Teilnehmeranschlusseinrichtung AE1 an die entsprechende Kommunikationseinrichtung KE1 übermittelt werden.

Es sei angemerkt, dass an eine Teilnehmeranschlusseinrichtung AE1...n mehrere Kommunikationseinrichtungen beispielsweise über lokales Netwerk bzw. LAN anschließbar sind - nicht dargestellt. Erfindungswesentlich ist es, dass an der Multiplexereinrichtung MUX eintreffende Meldungen ARP-REQUEST bzw. entsprechende Informationen über den geeigneten Anschluss AE1...n weitergeleitet werden, Die protokollkonforme Weiterbehandlung der über den Anschluss AE1...n weitergeleiteten Meldung erfolgt innerhalb des lokalen Netzes.

Die im Rahmen des ARP ausgesendete Antwort der durch die Zieladresse ZA adressierten und an der Teilnehmeranschlusseinrichtung bzw. Subscriber-Port angeschlossenen Kommunikationseinrichtung wird anschließend für das im Rahmen des Ethernet-Protokolls stattfindende "MAC Learning" der Forwarding Data Base (FDB) sowie für die Komplettierung des ARP-Table-Eintrags genutzt und in Richtung übergeordnetes Kommunikationsnetz OKN weitergeleitet. Der Eintrag in der FDB und in der ARP-Tabelle wird erst wieder gelöscht, wenn ein späterer ARP-REQUEST nicht vom Teilnehmer entsprechend beantwortet wird.

Durch das erfindungsgemäße Verfahren werden die gemäß Rundsendeverfahren ausgesendeten Meldungen bzw. ARP-REQUEST nur noch an die jeweils betroffenen d.h. entsprechend adressierten Teilnehmer bzw. Kommunikationseinrichtungen KE1...N übermittelt. Damit wird das Nachrichtenaufkommen verringert und die jeweiligen Teilnehmer können nur die jeweils für sie relevanten ARP-Frames empfangen.

Da nur die aus dem Kommunikationsnetz OKN empfangenen Meldungen bzw. ARP-REQUEST als Trigger für interne Nachrichten verwendet werden, gibt es kein Timing-Problem zwischen internen und externen Prozessen; dies bedeutet, dass durch die in den Routern ROUT angeordneten Timer das jeweilige Prozessverhalten bzw. der Ablauf von Prozessen bestimmt wird.

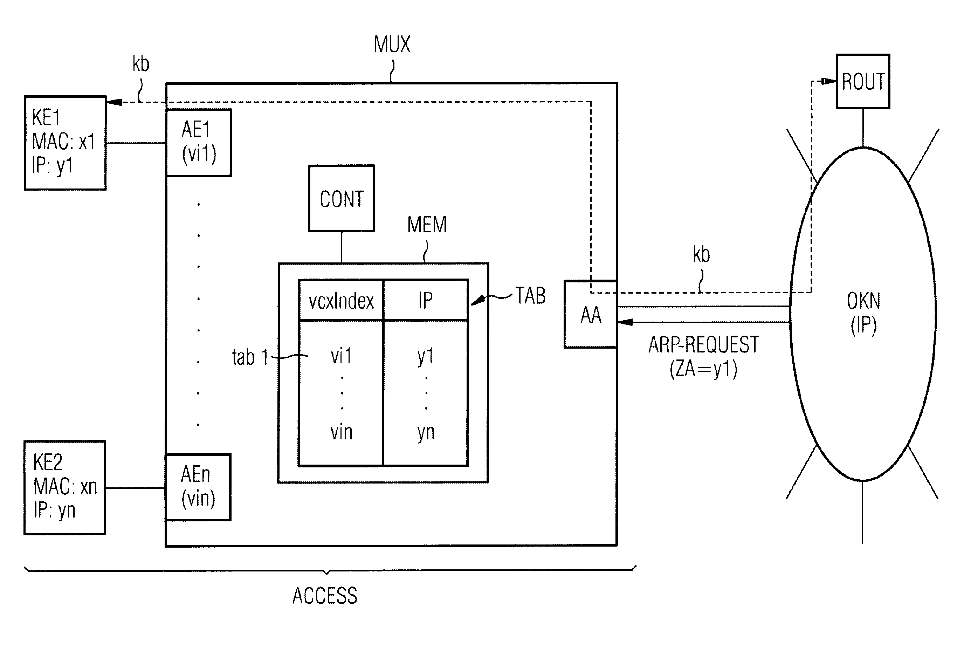

## Patentansprüche

1. Verfahren zum Einrichten einer Kommunikationsbeziehung (kb) zu zumindest einer über eine Multiplexereinrichtung (MUX) an zumindest ein Kommunikationsnetz (OKN) angeschlossenen Kommunikationseinrichtung (KE1...n), welche zumindest eine kommunikationsnetzspezifische Adresse (IP) aufweist,
bei dem zumindest eine die Einrichtung der Kommunikationsbeziehung (kb) initiierende Broadcast-Meldung (ARP-REQUEST) über das Kommunikationsnetz (OKN) (MUX) übermittelt wird,
wobei
jeweils den Anschluss (AE1...n) der zumindest einen Kommunikationseinrichtung (KE1...n) an die Multiplexereinrichtung (MUX) repräsentierende Anschluss-Informationen (vcxIndex) in der Multiplexereinrichtung (MUX) gespeichert sind, **dadurch gekennzeichnet dass**, den Anschluss-Informationen (vcxIndex) jeweils die zumindest eine kommunikationsnetzspezifische Adresse (IP) der zumindest einen an den Anschluss (AE1...n) jeweils angeschlossenen Kommunikationseinrichtung (KE1...n) zugeordnet ist,
die zumindest eine an die Multiplexereinrichtung übermittelte Meldung (ARP-REQUEST) detektiert und zumindest eine in der detektierten Meldung (ARP-REQUEST) enthaltene Ziel-Adresse (ZA) mit den gespeicherten kommunikationsnetzspezifischen Adressen (IP) verglichen wird, und
bei Feststellung einer zumindest teilweisen Übereinstimmung der miteinander verglichenen Informationen (IP, ZA) die Meldung (ARP-REQUEST) oder eine die Einrichtung der Kommunikationsbeziehung initiierende Information an den zumindest einen durch die zugeordneten Anschluss-Informationen (vcxIndex) repräsentierten Anschluss (AE1...n) weitervermittelt wird.

2. Verfahren nach Anspruch 1,
**dadurch gekennzeichnet,**
**dass** das zumindest ein Kommunikationsnetz (OKN) als paket- oder zellenorientiertes Kommunikationsnetz ausgestaltet ist.

3. Verfahren nach Anspruch 2,
**dadurch gekennzeichnet,**
**dass** das Kommunikationsnetz (OKN) gemäß dem Internetprotokoll ausgestaltet ist, wobei die zumindest eine kommunikationsnetzspezifische Adresse (IP) gemäß dem Internetprotokoll ausgestaltet ist.

4. Verfahren nach Anspruch 3,
**dadurch gekennzeichnet,**
**dass** die die Kommunikationsbeziehung (kb) initiierende Meldung (ARP-REQUEST) gemäß dem Address Resolution Protokoll ARP ausgestaltet ist, wobei im Rahmen des Address-Resolution-Protokolls mittels Rundsende-Verfahrens ausgesendete ARP-Meldungen detektiert und in den ARP-Meldungen enthaltene Ziel-Adressen (ZA) mit den in der Multiplexereinrichtung (MUX) gespeicherten kommunikationsnetzspezifischen Adressen (IP) verglichen werden.

5. Kommunikationsanordnung mit einer Multiplexereinrichtung (MUX) und zumindest einem Kommunikationsnetz (OKN) und Mitteln zum Einrichten einer Kommunikationsbeziehung (kb) zu zumindest einer über die Multiplexereinrichtung (MUX) an zumindest ein Kommunikationsnetz (OKN) angeschlossenen Kommunikationseinrichtung (KE1...n), welche zumindest eine kommunikationsnetzspezifische Adresse (IP) aufweist,
mit im Kommunikationsnetz (OKN) vorgesehenen Mitteln zum Übermitteln zumindest einer die Einrichtung der Kommunikationsbeziehung (kb) initiierende Broadcast-Meldung (ARP-REQUEST),
wobei
der Multiplexereinrichtung (MUX) Speichermittel zum Speichern von jeweils den Anschluss (AE1...n) der zumindest einen Kommunikationseinrichtung (KE1...n) an die Multiplexereinrichtung (MUX) repräsentierende Anschluss-Informationen (vcxIndex) zugeordnet sind, **dadurch gekennzeichnet dass**, den Anschluss-Informationen (vcxIndex) jeweils die zumindest eine kommunikationsnetzspezifische Adresse (IP) der zumindest einen an den Anschluss (AE1...n) jeweils angeschlossenen Kommunikationseinrichtung (KE1...n) zugeordnet ist,
der Multiplexereinrichtung (MUX) zugeordnete Vergleichermittel (CONT) vorgesehen sind, durch welche die zumindest eine an die Multiplexereinrichtung übermittelte Meldung (ARP-REQUEST) detektiert und zumindest eine in der detektierten Meldung (ARP-REQUEST) enthaltene Ziel-Adresse (ZA) mit den gespeicherten kommunikationsnetzspezifischen Adressen (IP) verglichen wird, und
die Vergleichermittel derart ausgestaltet sind, dass bei Feststellung einer zumindest teilweisen Übereinstimmung der miteinander verglichenen Informationen (IP, ZA) die Meldung (ARP-REQUEST) oder eine die Einrichtung der Kommunikationsbeziehung initiierende Information an den zumindest einen durch die zugeordneten Anschluß-Informationen (vcxIndex) repräsentierten Anschluss (AE1...n) weitervermittelt wird.

6. Kommunikationsanordnung nach Anspruch 5,
**dadurch gekennzeichnet,**
**dass** das zumindest ein Kommunikationsnetz (OKN) als paket- oder zellenorientiertes Kommunikationsnetz ausgestaltet ist.

7. Kommunikationsanordnung nach Anspruch 6,
**dadurch gekennzeichnet,**
**dass** das Kommunikationsnetz (OKN) gemäß dem Internetprotokoll ausgestaltet ist, wobei die zumindest eine kommunikationsnetzspezifische Adresse (IP) gemäß dem Internetprotokoll ausgestaltet ist.

8. Kommunikationsanordnung nach Anspruch 7,
**dadurch gekennzeichnet,**
**dass** die die Kommunikationsbeziehung (kb) initiierende Meldung (ARP-REQUEST) gemäß dem Address Resolution Protokoll ARP ausgestaltet ist,
**dass** die Vergleichermittel (CONT) derart ausgestaltet sind, dass im Rahmen des Address-Resolution-Protokolls mittels Rundsende-Verfahrens ausgesendete ARP-Meldungen detektiert und in den ARP-Meldungen enthaltene Ziel-Adressen (ZA) mit den in der Multiplexereinrichtung (MUX) gespeicherten kommunikationsnetzspezifischen Adressen (IP) verglichen werden.

9. Kommunikationsvorrichtung (MUX) zum Einrichten einer Kommunikationsbeziehung (kb) zu zumindest einer über die Kommunikationsvorrichtung (MUX) an zumindest ein Kommunikationsnetz (OKN) anschließbaren Kommunikationseinrichtung (KE1...n), welche zumindest eine kommunikationsnetzspezifische Adresse (IP) aufweist,
wobei im Kommunikationsnetz (OKN) Mittel zum Übermitteln zumindest einer die Einrichtung der Kommunikationsbeziehung (kb) initiierenden Broadcast-Meldung (ARP-REQUEST) in Richtung der Multiplexereinrichtung (MUX) angeordnet sind,
wobei
in der Kommunikationsvorrichtung (MUX) Speichermittel zum Speichern von jeweils den Anschluss (AE1...n) der zumindest einen Kommunikationseinrichtung (KE1...n) an die Kommunikationsvorrichtung (MUX) repräsentierende Anschluss-Informationen (vcxIndex) zugeordnet sind, **dadurch gekennzeichnet dass**, den Anschluss-Informationen (vcxIndex) jeweils die zumindest eine kommunikationsnetzspezifische Adresse (IP) der zumindest einen an den Anschluss (AE1...n) jeweils anschließbaren Kommunikationseinrichtung (KE1...n) zugeordnet ist,
der Kommunikationsvorrichtung (MUX) zugeordnete Vergleichermittel (CONT) vorgesehen sind, durch welche die zumindest eine an die Kommunikationsvorichtung übermittelte Meldung (ARP-REQUEST) detektiert und zumindest eine in der detektierten Meldung (ARP-REQUEST) enthaltene Ziel-Adresse (ZA) mit den gespeicherten kommunikationsnetzspezifischen Adressen (IP) verglichen wird, und
die Vergleichermittel derart ausgestaltet sind, daß bei Feststellung einer zumindest teilweisen Übereinstimmung der miteinander verglichenen Informationen (IP, ZA) die Meldung (ARP-REQUEST) oder eine die Einrichtung der Kommunikationsbeziehung initiierende Information an den zumindest einen durch die zugeordneten Anschluss-Informationen (vcxIndex) repräsentierten Anschluss (AE1...n) weitervermittelt wird.

## Claims

1. Method for setting up a communication relationship (kb) with at least one communication device (KE1...n) which is connected to at least one communication network (OKN) via a multiplexer device (MUX) and which has at least one communication-network-specific address (IP),
in which at least one broadcast message (ARP-REQUEST) initiating setup of the communication relationship (kb) is transmitted via the communication network (OKN) (MUX),
wherein connection information (vcxIndex) respectively representing the connection (AE1...n) of the at least one communication device (KE1...n) to the multiplexer device (MUX) is stored in the multiplexer device (MUX), **characterized in that** the connection information (vcxIndex) respectively has the at least one communication-network-specific address (IP) of the at least one communication device (KE1...n) which is respectively connected to the connection (AE1...n) associated with it,
the at least one message (ARP-REQUEST) transmitted to the multiplexer device is detected and at least one destination address (ZA) which the detected message (ARP-REQUEST) contains is compared with the stored communication-network-specific addresses (IP), and
if an at least partial match is found for the compared information (IP, ZA) then the message (ARP-REQUEST) or a piece of information initiating setup of the communication relationship is forwarded to the at least one connection (AE1...n) represented by the associated connection information (vcxIndex).

2. Method according to Claim 1,
**characterized**
**in that** the at least one communication network (OKN) is in the form of a packet-oriented or cell-oriented communication network.

3. Method according to Claim 2,
**characterized**
**in that** the communication network (OKN) is designed on the basis of the Internet Protocol, with the at least one communication-network-specific address (IP) being designed on the basis of the Internet Protocol.

4. Method according to Claim 3,
**characterized**
**in that** the message (ARP-REQUEST) initiating the communication relationship (kb) is designed on the basis of the Address Resolution Protocol ARP, with ARP messages transmitted under the Address Resolution Protocol using a broadcast method being detected and destination addresses (ZA) which the ARP messages contain being compared with the communication-network-specific addresses (IP) stored in the multiplexer device (MUX).

5. Communication arrangement with a multiplexer device (MUX) and at least one communication network (OKN) and means for setting up a communication relationship (kb) with at least one communication device (KE1...n) which is connected to at least one communication network (OKN) via the multiplexer device (MUX) and which has at least one communication-network-specific address (IP),
having means, provided in the communication network (OKN), for transmitting at least one broadcast message (ARP-REQUEST) initiating setup of the communication relationship (kb),
wherein the multiplexer device (MUX) has associated memory means for storing connection information (vcxIndex) respectively representing the connection (AE1...n) of the at least one communication device (KE1...n) to the multiplexer device (MUX), **characterized in that** the connection information (vcxIndex) respectively has the at least one communication-network-specific address (IP) of the at least one communication device (KE1...n) which is respectively connected to the connection (AE1...n) associated with it,
comparator means (CONT) associated with the multiplexer device (MUX) are provided which detect the at least one message (ARP-REQUEST) transmitted to the multiplexer device and compare at least one destination address (ZA) which the detected message (ARP-REQUEST) contains with the stored communication-network-specific addresses (IP), and
the comparator means are designed such that if an at least partial match is found for the compared information (IP, ZA) then the message (ARP-REQUEST) or a piece of information initiating setup of the communication relationship is forwarded to the at least one connection (AE1...n) represented by the associated connection information (vcxIndex).

6. Communication arrangement according to Claim 5,
**characterized**
**in that** the at least one communication network (OKN) is in the form of a packet-oriented or cell-oriented communication network.

7. Communication arrangement according to Claim 6,
**characterized**
**in that** the communication network (OKN) is designed on the basis of the Internet Protocol, with the at least one communication-network-specific address (IP) being designed on the basis of the Internet Protocol.

8. Communication arrangement according to Claim 7,
**characterized**
**in that** the message (ARP-REQUEST) initiating the communication relationship (kb) is designed on the basis of the Address Resolution Protocol ARP,
**in that** the comparator means (CONT) are designed such that ARP messages transmitted under the Address Resolution Protocol using a broadcast method are detected and destination addresses (ZA) which the ARP messages contain are compared with the communication-network-specific addresses (IP) stored in the multiplexer device (MUX).

9. Communication apparatus (MUX) for setting up a communication relationship (kb) with at least one communication device (KE1...n) which can be connected to at least one communication network (OKN) via the communication apparatus (MUX) and which has at least one communication-network-specific address (IP),
where the communication network (OKN) contains means for transmitting at least one broadcast message (ARP-REQUEST) initiating setup of the communication relationship (kb) to the multiplexer device (MUX),
wherein the communication apparatus (MUX) contains associated memory means for storing connection information (vcxIndex) respectively representing the connection (AE1...n) of the at least one communication device (KE1...n) to the communication apparatus (MUX), **characterized in that** the connection information (vcxIndex) respectively has the at least one communication-network-specific address (IP) of the at least one communication device (KE1...n) which can be respectively connected to the connection (AE1...n) associated with it,
comparator means (CONT) associated with the communication apparatus (MUX) are provided which detect the at least one message (ARP-REQUEST) transmitted to the communication apparatus and compare at least one destination address (ZA) which the detected message (ARP-REQUEST) contains with the stored communication-network-specific addresses (IP), and the comparator means are in a form such that if an at least partial match is found for the compared information (IP, ZA) then the message (ARP-REQUEST) or a piece of information initiating setup of the communication relationship is forwarded to the at least one connection (AE1...n) represented by the associated connection information (vcxIndex).

## Revendications

1. Procédé de configuration d'une liaison de communication (kb) vers au moins un équipement de communication (KE1...n) raccordé à au moins un réseau de communication (OKN) par l'intermédiaire d'un dispositif de multiplexage (MUX), lequel équipement de communication présente au moins une adresse (IP) spécifique au réseau de communication,
dans lequel au moins un message de radiodiffusion (ARP-REQUEST) initiant la configuration de la liaison de communication (kb) est transmis par l'intermédiaire du réseau de communication (OKN) (MUX),
des informations de connexion (vcxIndex) représentant respectivement la connexion (AE1...n) de l'au moins un équipement de communication (KE1...n) au dispositif de multiplexage (MUX) étant mémorisées dans le dispositif de multiplexage (MUX), **caractérisé en ce que** respectivement l'au moins une adresse (IP), spécifique au réseau de communication, de l'au moins un équipement de communication (KE1...n) raccordé respectivement à la connexion (AE1...n) est affectée aux informations de connexion (vcxIndex),
**en ce que** l'au moins un message (ARP-REQUEST) transmis au dispositif de multiplexage est détecté et **en ce qu'**au moins une adresse de destination (ZA) contenue dans le message détecté (ARP-REQUEST) est comparée aux adresses (IP) mémorisées, spécifiques au réseau de communication, et **en ce que** lors de la constatation d'une concordance au moins partielle des informations comparées entre elles (IP, ZA), le message (ARP-REQUEST) ou une information initiant la configuration de la liaison de communication est transféré à l'au moins une connexion (AE1...n) représentée par les informations de connexions affectées (vcxIndex).

2. Procédé selon la revendication 1,
**caractérisé en ce**
**que** l'au moins un réseau de communication (OKN) est réalisé en tant que réseau de communication orienté paquet ou orienté cellule.

3. Procédé selon la revendication 2,
**caractérisé en ce**
**que** le réseau de communication (OKN) est réalisé selon le protocole Internet, l'au moins une adresse (IP) spécifique au réseau de communication étant réalisée selon le protocole Internet.

4. Procédé selon la revendication 3,
**caractérisé en ce**
**que** le message (ARP-REQUEST) initiant la liaison de communication (kb) est réalisé selon le protocole Address Resolution Protocole ARP, des messages ARP émis au moyen du procédé de transmission automatique d'un message à plusieurs destinataires étant détectés dans le cadre de l'Address Resolution Protocole et les adresses de destination (ZA) contenues dans les messages ARP étant comparées aux adresses (IP) spécifiques au réseau de communication mémorisées dans le dispositif de multiplexage (MUX).

5. Agencement de communication comprenant un dispositif de multiplexage (MUX) et au moins un réseau de communication (OKN) et des moyens destinés à configurer une liaison de communication (kb) vers au moins un équipement de communication (KE1...n) raccordé à au moins un réseau de communication (OKN) par l'intermédiaire du dispositif de multiplexage (MUX), lequel équipement de communication présente au moins une adresse (IP) spécifique au réseau de communication,
comprenant des moyens ménagés dans le réseau de communication (OKN), destinés à transmettre au moins un message de radiodiffusion (ARP-REQUEST) initiant la configuration de la liaison de communication (kb),
des moyens de mémoire, destinés à mémoriser des informations de connexion (vcxIndex) représentant respectivement la connexion (AE1...n) de l'au moins un équipement de communication (KE1...n) au dispositif de multiplexage (MUX), étant affectés au dispositif de multiplexage (MUX), **caractérisé en ce que** respectivement l'au moins une adresse (IP), spécifique au réseau de communication de l'au moins un équipement de communication (KE1...n) respectivement raccordé à la connexion (AE1...n), est affectée aux informations de connexion (vcxIndex),
**en ce que** des moyens comparateurs (CONT) affectés au dispositif de multiplexage (MUX) sont ménagés, au moyen desquels l'au moins un message (ARP-REQUEST) transmis au dispositif de multiplexage est détecté et **en ce qu'**au moins une adresse de destination (ZA) contenue dans le message détecté (ARP-REQUEST) est comparée aux adresses (IP) mémorisées, spécifiques au réseau de communication, et **en ce que** les moyens comparateurs sont réalisés de manière à ce que lors de la constatation d'une concordance au moins partielle des informations comparées entre elles (IP, ZA), le message (ARP-REQUEST) ou une information initiant la configuration de la liaison de communication est transféré à l'au moins une connexion (AE1...n) représentée par les informations de connexion affectées (vcxIndex).

6. Agencement de communication selon la revendication 5,
**caractérisé en ce**
**que** l'au moins un réseau de communication (OKN) est réalisé en tant que réseau de communication orienté paquet ou orienté cellule.

7. Agencement de communication selon la revendication 6,
**caractérisé en ce**
**que** le réseau de communication (OKN) est réalisé selon le protocole Internet, l'au moins une adresse (IP) spécifique au réseau de communication étant réalisée selon le protocole Internet.

8. Agencement de communication selon la revendication 7,
**caractérisé en ce**
**que** le message (ARP-REQUEST) initiant la liaison de communication (kb) est réalisé selon le protocole Address Resolution Protocole ARP,
en ce que les moyens comparateurs (CONT) sont réalisés de manière à ce que les messages ARP émis dans le cadre de l'Address Resolution Protocole au moyen du procédé de transmission automatique d'un message à plusieurs destinataires sont détectés et en ce que les adresses de destination (ZA) contenues dans les messages ARP sont comparées aux adresses (IP) spécifiques au réseau de communication, mémorisées dans le dispositif de multiplexage (MUX).

9. Dispositif de communication (MUX) destiné à la configuration d'une liaison de communication (kb) vers au moins un équipement de communication (KE1...n) raccordable à au moins un réseau de communication (OKN) par l'intermédiaire du dispositif de communication (MUX), lequel équipement de communication présente au moins une adresse (IP) spécifique au réseau de communication,
des moyens destinés à transmettre au moins un message de radiodiffusion (ARP-REQUEST) initiant la configuration de la liaison de communication (kb) étant disposés dans le réseau de communication (OKN) en direction du dispositif de multiplexage (MUX),
des moyens de mémoire destinés à mémoriser des informations de connexion (vcxIndex) représentant respectivement la connexion (AE1...n) de l'au moins un équipement de communication (KE1...n) au dispositif de multiplexage (MUX) étant affectés au dispositif de multiplexage (MUX), **caractérisé en ce que** respectivement l'au moins une adresse (IP) spécifique au réseau de communication de l'au moins un équipement de communication (KE1...n) respectivement raccordable à la connexion (AE1...n) est affectée aux informations de connexion (vcxIndex),
**en ce que** des moyens comparateurs (CONT) affectés au dispositif de multiplexage (MUX) sont ménagés, au moyen desquels l'au moins un message (ARP-REQUEST) transmis au dispositif de communication est détecté et **en ce qu'**au moins une adresse de destination (ZA) contenue dans le message détecté (ARP-REQUEST) est comparée aux adresses (IP) mémorisées, spécifiques au réseau de communication, et **en ce que** les moyens comparateurs sont réalisés de manière à ce que lors de la constatation d'une concordance au moins partielle des informations comparées entre elles (IP, ZA), le message (ARP-REQUEST) ou une information initiant la configuration de la liaison de communication est transféré à l'au moins une connexion (AE1...n) représentée par les informations de connexion affectées (vcxIndex).
